# EUROPÄISCHE PATENTSCHRIFT

(11) **EP 2 435 211 B1**
(45) Veröffentlichungstag und Bekanntmachung des Hinweises auf die Patenterteilung: **08.01.2014**
(21) Anmeldenummer: 10767985.4
(22) Anmeldetag: 06.10.2010
(51) Int. Cl.: B24B 23/02, B24B 55/05, B23Q 11/08, B25F 5/02, B23D 45/16, B27G 19/02, B27G 21/00

(54) **ELEKTROHANDWERKZEUGGERÄT MIT VERSTELLBARER SCHUTZHAUBE**
ELECTRIC HANDHELD TOOL HAVING AN ADJUSTABLE COVER
OUTIL ÉLECTRIQUE PORTATIF À CAPOT DE PROTECTION RÉGLABLE

(30) Priorität: 06.10.2009 DE 102009048357
(43) Veröffentlichungstag der Anmeldung: 04.04.2012
(73) Patentinhaber: Metabowerke GmbH, 72622 Nürtingen (DE)
(72) Erfinder: ROHDE, Alexander, 72644 Oberboihingen (DE); KELLER, Michael, 72622 Nürtingen (DE)
(74) Vertreter: Markfort, Iris-Anne Lucie
(86) Internationale Anmeldenummer: PCT/EP2010/064907
(87) Internationale Veröffentlichungsnummer: WO 2011/042460

(56) Entgegenhaltungen:
- EP-A1- 1 908 549
- DE-A1- 3 633 943
- DE-A1-102006 027 576
- DE-C1- 19 841 409

## Beschreibung

Die Erfindung betrifft ein Elektrohandwerkzeug mit einer am Spindelhals lösbar befestigbaren Schutzhaube, die um eine zur Spindelachse parallele oder mit dieser fluchtende Achse zumindest beschränkt drehbar ist und über ein federnd vorgespanntes Rastmittel an der Schutzhaube in verschiedenen Drehstellungen mit einem Gegenrastmittel am Spindelhals drehhemmend zusammenwirkt und das Rastmittel mit dem Gegenrastmittel in der Drehstellung im Eingriff befindbar ist, wobei die Schutzhaube zur Montage auf den Spindelhals aufschiebbar und dann in eine Hintergriffsstellung bringbar ist und wobei das Rastmittel an der Schutzhaube in axialer Richtung der Spindelachse federnd auslenkbar ist und die Gegenrastmittel an der axialen Stirnseite des Spindelhalses in Umfangsrichtung vorgesehen sind.

Beim in Eingriff stehen von Rastmittel und Gegenrastmittel wirken die beiden rastend zusammen, so dass die Schutzhaube in einer bestimmten Drehstellung arretiert ist.

Eine derartige Schutzhaubenhalterung ist beispielsweise aus der DE 36 33 943 C2 bekannt. Die Schutzhaube umfasst einen kragenförmigen Abschnitt, mit dem die Schutzhaube auf den Spindelhals des Elektrohandwerkzeugs aufschiebbar und sodann in eine Hintergriffstellung drehbar ist.

An dem kragenförmigen Abschnitt der Schutzhaube ist ein in radialer Richtung vorgespanntes S-förmig gebogenes Federelement vorgesehen, welches in eine Umfangsverzahnung des Spindelhalses drehhemmend eingreift. Die Schutzhaube kann unter Überwindung der Drehhemmung von einer Raststellung in die nächste verdreht werden.

Bei dieser Schutzhaubenhalterung erweist es sich als nachteilig, dass das verhältnismäßig fragile S-förmige Federelement insbesondere beim Lösen und Abnehmen der Schutzhaube leicht beschädigt bzw. verbogen werden kann. Um die Schutzhaube allein gegen die Kraft der drehhemmenden Feder verdrehen zu können, sind die die Hintergriffstellung bewirkenden Mittel, beispielsweise eine Umfangsnut, so ausgebildet, dass die Schutzhaube in axialer Richtung spielbehaftet aufgenommen ist. Dies führt zu störenden Klappergeräuschen.

Ein gattungsgemäßes Elektrohandwerkzeuggerät ist aus der DE 198 41 409 C1 bekannt.

Nach neuesten Anforderungen müssen Schutzhauben für Trenn- und Winkelschleifer eine Schutzhaubenprüfung gemäß DIN EN 60745-2-3 bestehen, bei der nach Zerstörung der Schleif- oder Trennscheibe es nur zu einer Verdrehung der Schutzhaube um ein vorgegebenes Maß gegenüber einer definierten Ausgangsstellung kommt.

Der vorliegenden Erfindung liegt die Aufgabe zugrunde, das genannte Elektrohandwerkzeuggerät insoweit zu verbessern.

Diese Aufgabe wird durch ein Elektrohandwerkzeug mit den Merkmalen des Anspruchs 1 gelöst.

Auf diese Weise wird erfindungsgemäß erreicht, dass zum einen eine drehhemmende Rastung der Schutzhaube in einer jeweiligen Drehstellung gegeben ist und zum anderen die Schutzhaube in axialer Richtung stets derart vorgespannt ist, dass sie satt und spielfrei am Spindelhals montiert ist. Hierdurch wird der Eindruck eines qualitativ hochstehenden Erzeugnisses vermittelt und es entstehen keine störenden Klappergeräusche beim Betrieb des Elektrohandwerkzeugs.

Durch die Vorsehung eines Anschlagmittels, das in einer ersten Position mit dem Rastmittel zusammenwirkt und die axial federnde Auslenkung des Rastmittels derart begrenzt, dass das Rastmittel und das Gegenrastmittel in Eingriff gehalten werden und in einer zweiten Position die axiale Auslenkung so weit freigibt, dass Rastmittel und Gegenrastmittel außer Eingriff bringbar und zueinander verdrehbar sind, wird erreicht, dass die Anforderungen in der DIN EN.60745-2-3, die vorsieht, dass bei einer Zerstörung der Schleif- oder Trennscheibe es nur zu einem geringfügigen Verdrehen der Schutzhaube gegenüber der Arbeitstellung kommen darf, erfüllt werden, da ein Ausrasten der Rastmittel aus den Gegenrastmitteln verhindert oder zumindest so weit erschwert ist, dass ein Verdrehen der Schutzhaube gegenüber der Ursprungsposition so weit verhindert werden kann, dass die entsprechenden Vorschriften eingehalten werden. Weiterhin kann vorgesehen sein, dass das Anschlagmittel außer Eingriff oder so in eine zweite Position bewegt wird, dass die Rastmittel und Gegenrastmittel außer Eingriff gelangen können, insbesondere einander überrasten können, und dann zueinander verdrehbar sind. Auf diese Weise kann weiterhin eine einfache Verstellung der Schutzhaube in die verschiedenen Drehstellungen erreicht werden und dennoch ein starres Anschlagmittel vorgesehen sein, dass sich nicht durch die Kraft eines Bedieners überwinden lässt.

Dabei kann vorgesehen sein, dass das Anschlagmittel an der Schutzhaube selber angebracht ist.

Insbesondere ist bei üblichen Schutzhauben vorgesehen, dass diese einen kragenförmigen Abschnitt aufweisen, der insbesondere durch ein Spannband gebildet ist oder mit einem Spannband verbunden werden kann, wobei das Spannband eine weitere Festlegung am Spindelhals ermöglicht, indem das Spannband durch Spannen in Umfangsrichtung ermöglicht, dass sich die Schutzhaube im Bereich des Spindelhalses und des Kragens gegen den Spindelhals anlegt. Dabei kann das Anschlagmittel im Bereich des kragenförmigen Abschnitts bzw. des Schutzhaubenkragens festgelegt werden und insbesondere mit dem Spannband verbunden sein.

Es kann auch vorgesehen sein, dass der kragenförmige Abschnitt der Schutzhaube oder des Spannbandes eine entsprechende Ausnehmung aufweist und im Bereich der Ausnehmung vom Anschlagmittel durchgriffen wird. Alternativ kann das Anschlagmittel innerhalb des kragenförmigen Abschnitts angeordnet sein.

Das federnd auslenkbare Rastmittel erstreckt sich vorzugsweise im wesentlichen senkrecht zur Spindelachse. In weiterer Ausbildung der Erfindung ist das federnd auslenkbare Rastmittel als flächenhaftes Federblech ausgebildet. Dies erweist sich als ganz besonders vorteilhaft, da das Rastmittel erstmalig dazu verwendet werden kann, eine Abdeckung des Spindelhalsbereichs zur Bearbeitungsseite hin zu bewirken, so dass der Bereich der Rast- und Gegenrastmittel aber auch der Übergang der Spindel zum Werkzeuggehäuse vor Staub- und Partikelbeaufschlagung und damit einhergehendem Abrieb geschützt werden kann. Insoweit erweist es sich als ganz besonders vorteilhaft, wenn das federnd auslenkbare Rastmittel eine Öffnung aufweist, durch welche sich die Antriebsspindel oder Werkzeugachse hindurch erstreckt, da dann eine weitgehende Abdeckung des kritischen Bereichs erzielt werden kann.

Eine kompakte und sehr leicht handhabbare Schutzhaube mit einem kragenförmigen, flanschartigen Abschnitt, mit dem sie auf den Spindelhals des Elektrohandwerkzeugs aufschiebbar ist, ist so ausgebildet, dass das federnd auslenkbare Rastmittel mit einem die Antriebsspindel oder Werkzeugachse umgebenden Abschnitt innerhalb des kragenförmigen Abschnitts angeordnet ist. Es besteht solchenfalls nicht die Gefahr, dass beim Gebrauch auf der Baustelle das federnd auslenkbare Rastmittel verbogen wird.

Auch die Handhabbarkeit und Verstaubarkeit der Schutzhaube wird dadurch verbessert.

In herstellungstechnischer Hinsicht erweist es sich als besonders vorteilhaft, wenn das federnd auslenkbare Rastmittel an der werkzeug- oder werkstückzugewandten Innenseite der Schutzhaube angeformt, insbesondere angenietet, angelötet oder angeschweißt ist. Es besteht damit die Möglichkeit, auch eine an sich bekannte über schellenartige Kragenabschnitte am Spindelhals klemmbare Schutzhaube mit einem erfindungsgemäßen, federnd vorgespannten Rastmittel auszubilden, welches hierzu lediglich an der Innenseite der Schutzhaube befestigt zu werden braucht. Solchenfalls werden die schellenartigen Kragenabschnitte derart miteinander verbunden, dass die Schutzhaube auf den Spindelhals aufschiebbar ist.

Radiale kulissenartige Vorsprünge an der Schutzhaube können dann über axiale, insbesondere nutförmige Führungsmittel am Spindelhals aufgeschoben und dann in eine Hintergriffstellung, beispielsweise in Form eines in Umfangsrichtung erstreckten Nutsystems, verdreht werden.

Eine Drehhemmung in einer jeweiligen Raststellung wird dann durch das in axialer Richtung federnd auslenkbare Rastmittel der Schutzhaube erreicht.

An dem als flächenhaftes Federblech ausgebildeten Rastmittel könnte auf der dem Spindelhals zugewandten Seite eine oder mehrere als Rastnase wirkende Erhebungen angebracht sein, oder das Rastmittel könnte in diesem Bereich beispielsweise V-förmig gebogen sein. Indessen erweist es sich als vorteilhaft, wenn aus der Ebene des Federblechs in Richtung auf die axiale Stirnseite des Spindelhalses eine Rastnase unter Ausführen eines Stanzschnitts herausgedrückt ist, da solchenfalls die flächenhafte, vorzugsweise ebene Ausbildung des Federblechs beibehalten werden kann. Die vorzugsweise auf die vorstehende Weise gebildete Rastnase weist in Umfangs- und Drehrichtung der Schutzhaube vorteilhafterweise Auflaufschrägen bildende Flanken auf. Je nach Neigung der Flanken und Ausbildung der Gegenrastmittel kann eine mehr oder weniger schwere Verdrehbarkeit der Schutzhaube am Spindelhals realisiert werden.

Vorteilhafterweise sind die Rastnasen verrundet ausgebildet und von einer gestanzten Freiformung radial innen begrenzt.

Es kann besonders bevorzugt vorgesehen sein, dass das Anschlagmittel in radialer oder in Umfangsrichtung von der ersten in die zweite Position und umgekehrt bewegbar ist. Besonders bevorzugt kann vorgesehen sein, dass das Anschlagmittel über eine Druck- oder Zugfeder mit der Schutzhaube verbunden ist und gegen die Kraft der Feder in Umfangsrichtung außer Eingriff mit dem Rastmittel bewegt werden kann bei einer Bewegung von der ersten in die zweite Position. Alternativ kann vorgesehen sein, dass ein Schwenkhebel vorgesehen ist, der das Anschlagmittel trägt oder mit diesem zusammenwirkt, wobei der Schwenkhebel mit einer Achse parallel zur Spindelachse versehen sein kann, um die der Schwenkhebel verschwenkbar an der Außenseite des kragenförmigen Abschnitts angelenkt ist. Schließlich kann auch vorgesehen sein, dass ein radial gegen eine Federkraft bewegbarer Stift als Anschlagmittel vorgesehen ist, wobei z. B. ein Schwenkhebel mit einem freien Ende an einem Kopf des Stiftes angreift und diesen durch die Verschwenkung in radialer Richtung außer Eingriff mit dem Rastmittel bewegt. Das Anschlagmittel kann dabei an der Schutzhaube geführt sein.

Besonders bevorzugt ist dabei vorgesehen, dass die Anschlagmittel diametral gegenüber dem Bereich des Rastmittels vorgesehen sind, an dem das Rastmittel mit der Schutzhaube verbunden ist. Hierdurch wird erreicht, dass der Bereich des Rastmittels, der die größte mögliche Auslenkung bei der Gestaltung des Rastmittels als Federblech vollführt, in seiner Auslenkung axial begrenzt wird und damit ein ungewolltes Ausrasten der Rastmittel aus den Gegenrastmitteln verhindert wird. Insbesondere wird das Anschlagmittel im Bereich einer Rastnase des Rastmittels angeordnet.

Besonders vorteilhaft ist vorgesehen, dass ein gewisser axialer Abstand zwischen Rastmittel und Anschlagmittel vorgesehen ist. Hierdurch wird erreicht, dass eine gewisse Verformung des Rastmittels bei Einleiten einer Energie, beispielsweise durch eine zerstörte Schleif- oder Trennscheibe, von dem Rastmittel über die Verformung des Rastmittels abgebaut werden kann und daher nicht durch die Schutzhaube bzw. das Anschlagmittel aufgenommen zu werden braucht. Der Abstand zwischen Anschlagmittel und Rastmittel ist dabei so zu wählen, dass ein Außereingriffgelangen von Rastmittel und Gegenrastmittel in der ersten Position verhindert werden kann, auf der anderen Seite das Anschlagmittel jedoch eine möglichst große Auslenkung zum Energieabbau erfahren kann.

Besonders bevorzugt ist dabei, wenn die Überführung von der ersten in die zweite Position, also in der Position, in der das Anschlagmittel mit dem Rastmittel zusammenwirkt, in eine Position, in es nicht mehr mit dem Rastmittel so zusammenwirkt, dass das Rastmittel mit dem Gegenrastmittel in Eingriff gehalten wird, gegen eine Rückstellkraft eines Rückstellmittels erfolgt. Dadurch wird erreicht, dass nur durch Betätigung des Rückstellmittels gegen dessen Kraft das Anschlagmittel bewegt werden kann und bei Beendigung des Bewegungsvorgangs das Anschlagmittel selbsttätig durch die Rückstellkraft des Rückstellmittels in die erste Position zurückkehrt. Als Rückstellmittel kann dabei eine bzw. die bereits beschriebene Druck- oder Zugfeder dienen, über die das Anschlagmittel mit der Schutzhaube verbunden ist.

Zur Ausbildung der Gegenrastmittel an der axialen Stirnseite des Spindelhalses sind vorteilhafterweise kronradartige Erhebungen vorgesehen, die vorzugsweise in Umfangsrichtung und nach radial innen abgeschrägte Flanken aufweisen.

Die Erhebungen sind an der axialen Stirnseite vorzugsweise radial außen angeordnet, so dass der Bereich der Stirnseite zwischen ihnen und der Antriebsspindel oder Werkzeugachse von dem Federblech abgedeckt ist. Hierdurch kann ein wirksamer Schutz gegen Beaufschlagung mit Staub und Partikeln erreicht werden.

Der Spindelhals ist vorzugsweise Teil eines an das Werkzeuggehäuse montierbaren Getriebeflanschteils, bei dem es sich vorteilhafter Weise um ein Kunststoffspritzteil handelt, welches um ein Spindellager herumgespritzt ist. Alternativ kann der Spindelhals ein Gussteil sein.

Dadurch, dass nach einem weiteren Erfindungsgedanken das Federblech in einer jeweiligen Raststellung gegen die axialen Erhebungen an der Stirnseite des Spindelhalses anliegt, ist eine noch weitergehende Abdichtung des Spindelhalsbereichs verwirklicht.

Weitere Merkmale, Einzelheiten und Vorteile der Erfindung ergeben sich aus den beigefügten Patentansprüchen und der zeichnerischen Darstellung und nachfolgenden Beschreibung einer bevorzugte Ausführungsform einer Schutzhaube und eines Spindelhalsteils. In der Zeichnung zeigt:
- Figur 1: eine Draufsicht auf eine nach dem Stand der Technik ausgebildete Schutzhaube;
- Figur 2: eine Schnittansicht gesehen in Richtung der Pfeile II-II in Figur 1;
- Figur 3: eine Stirnansicht eines Spindelhalsteils;
- Figur 4: eine Schnittansicht gesehen in Richtung der Pfeile IV-IV in Figur 3;
- Figur 5: eine Draufsicht auf eine nach einer ersten Ausgestaltung der Erfindung ausgebildete Schutzhaube in der ersten Position des Anschlagmittels;
- Figur 6: eine Draufsicht auf die Schutzhaube gemäß Figur 5 in einer zweiten Position des Anschlagmittels;
- Figur 7: eine Seitenansicht der Figur 5;
- Figur 8: eine Draufsicht auf eine nach einer weiteren Ausgestaltung der Erfindung ausgebildete Schutzhaube in einer ersten Position des Anschlagmittels;
- Figur 9: eine Draufsicht auf die Schutzhaube gemäß Figur 8 in einer zweiten Position des Anschlagmittels;
- Figur 10: eine Seitenansicht der Figur 8;
- Figur 11: eine Draufsicht auf eine nach einer weiteren Ausgestaltung der Erfindung ausgebildete Schutzhaube in einer ersten Position des Anschlagmittels;
- Figur 12: eine Draufsicht auf die Schutzhaube gemäß Figur 11 in einer zweiten Position des Anschlagmittels;
- Figur 13: eine Seitenansicht der Figur 11;
- Figuren 14 bis 16: ein weiteres Ausführungsbeispiel der Erfindung in verschiedenen Ansichten und
- Figuren 17 bis 19: ein weiteres Ausführungsbeispiel der Erfindung in verschiedenen Ansichten.

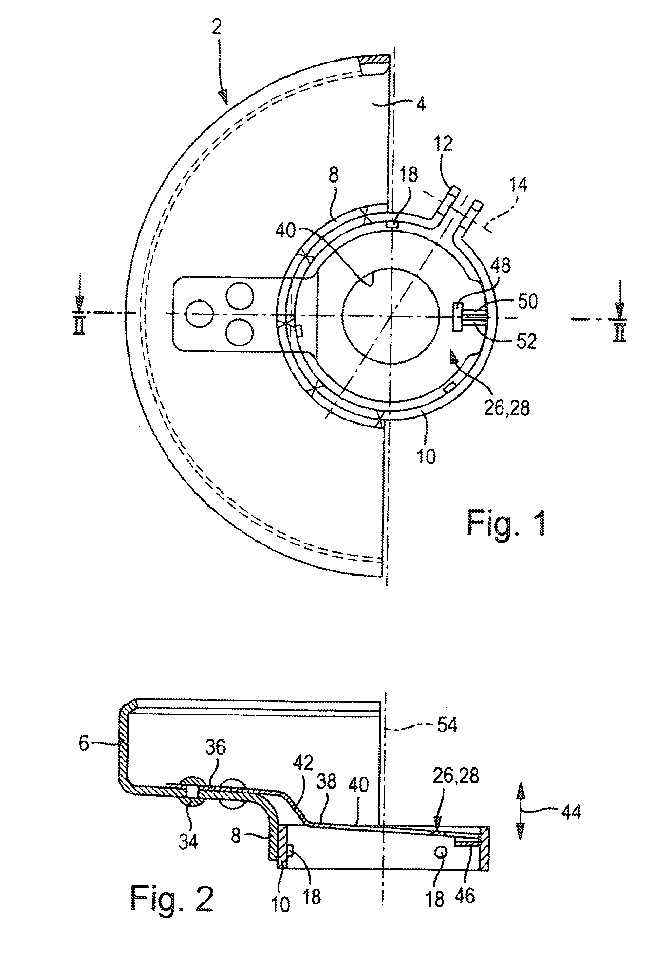

Die Figuren 1 und 2 zeigen eine Schutzhaube 2 nach dem Stand der Technik ohne das erfindungsgemäße Anschlagmittel für einen nicht dargestellten handgeführten Winkel oder Trennschleifer.

Die Schutzhaube 2 umfasst einen halbkreisscheibenförmigen Abdeckabschnitt 4 mit einem radial äußeren eine nicht dargestellte Schleif- oder Trennscheibe überfangenden Randabschnitt 6 und mit einem radial inneren kragenförmigen flanschartigen Abschnitt 8. Der kragenförmige Abschnitt ist radial innen mit einer Außenumfangsfläche eines ebenfalls kragenförmigen flanschartigen aus einem streifenförmigen Bandmaterial auf Kreisform gebogenen Halteabschnitts oder Spannbands 10 verschweißt. Der Halteabschnitt 10 ist aufweitbar und weist zwei nach radial außen abgebogene Befestigungsabschnitte 12 auf, die durch eine lediglich angedeutete Schraube 14 miteinander verbindbar sind. Für die Zwecke der vorliegenden Erfindung könnte der auf Kreisform gebogene Halteabschnitt 10 aber auch in sich geschlossen, beispielsweise einstückig ausgebildet sein, oder die Befestigungslaschen 12 könnten beispielsweise unter Zwischenordnung eines Abstandshalters unlösbar miteinander verschweißt werden, wobei der Innendurchmesser bzw. der Innenumfang entsprechend dem nachfolgend zu beschreibenden Spindelhals des Elektrohandwerkzeugs ausgebildet sein muss.

Am Innenumfang 16 des kragenförmigen Halteabschnittes sind drei radial nach innen vorspringende Kulissenzapfen 18 vorgesehen. Zur lösbaren Anordnung der Schutzhaube 2 am Spindelhals eines Elektrohandwerkzeugs wird die Schutzhaube mit dem kragenförmigen Halteabschnitt 10 über den Spindelhals in an sich bekannter Weise aufgeschoben, wobei die Schutzhaube so orientiert wird, dass die Kulissenzapfen 18 mit korrespondierenden, insbesondere in axialer Richtung verlaufenden nutförmigen Führungsausnehmungen 20 an einem den Spindelhals bildenden Getriebeflanschteil 22 fluchten und somit die Schutzhaube 2 auf den Spindelhals aufgeschoben werden kann. Die Schutzhaube 2 wird also in axialer Richtung aufgeschoben und dann in eine Hintergriffstellung verdreht, wobei die Kulissenzapfen 18 in eine in Umfangsrichtung erstreckte, insbesondere nutförmige Führungsaufnahme 24 am Getriebeflanschteil 22 verdreht werden.

Damit die Schutzhaube 2 in verschiedenen Drehstellungen selbsthemmend arretierbar ist, umfasst die Schutzhaube 2 ein federnd auslenkbares Rastmittel 26 in Form eines flächenhaft erstreckten Federblechs 28, welches mit Gegenrastmitteln 30 an der axialen Stirnseite 32 des Getriebeflanschteils 22 in einer jeweiligen Raststellung drehhemmend zusammenwirkt.

Das Federblech 28 umfasst einen gegen die Innenseite der Schutzhaube 2 anliegenden und mit dieser über Nieten 34 verbundenen Abschnitt 36 sowie einen scheibenförmigen Abschnitt 38 mit einer Öffnung 40, durch welche eine nicht dargestellte Antriebsspindel oder Werkzeugachse hindurchgreift. Der Anlageabschnitt 36 und der kreisscheibenförmige Abschnitt 38 sind über einen abgekanteten Verbindungsabschnitt 42 miteinander verbunden.

Der kreisscheibenförmige Abschnitt 38 ist in axialer Richtung, also in Richtung des Doppelpfeils 44 federnd auslenkbar. Er umfasst auf der der Stirnseite 32 des Getriebeflanschteils 22 zugewandten Seite eine Rastnase 46, die aus der Ebene des Federblechs bzw. des scheibenförmigen Abschnitts 38 herausgedrückt ist und radial innen von einer gestanzten Freiformung 48 begrenzt ist. Die Rastnase 46 weist in Umfangsrichtung Auflaufschrägen bildende Flanken 50, 52 auf.

Beim Aufschieben der Schutzhaube 2 auf den Spindelhals bzw. auf das Getriebeflanschteil 22 in der vorstehend beschriebenen Weise wird das federnde Rastmittel 26 durch die Gegenrastmittel 30 in der Figur 2 geringfügig nach oben ausgelenkt, so dass der scheibenförmige Abschnitt 38 im wesentlichen senkrecht zur Spindelachse 54 ausgerichtet ist. Die Rastnase 46 des Federblechs 28 wirkt dabei drehhemmend mit den Gegenrastmitteln 30 zusammen, in dem es eine Position in einer Vertiefung 56 zwischen zwei Erhebung 58 einzunehmen sucht. In einer jeweiligen Raststellung liegt der scheibenförmige Abschnitt 38 gegen die axiale Stirnseite 60 der Erhebungen 58 an und bewirkt so eine wirksame Abdichtung des Spindellagerbereichs 62 gegen die Bearbeitungsseite.

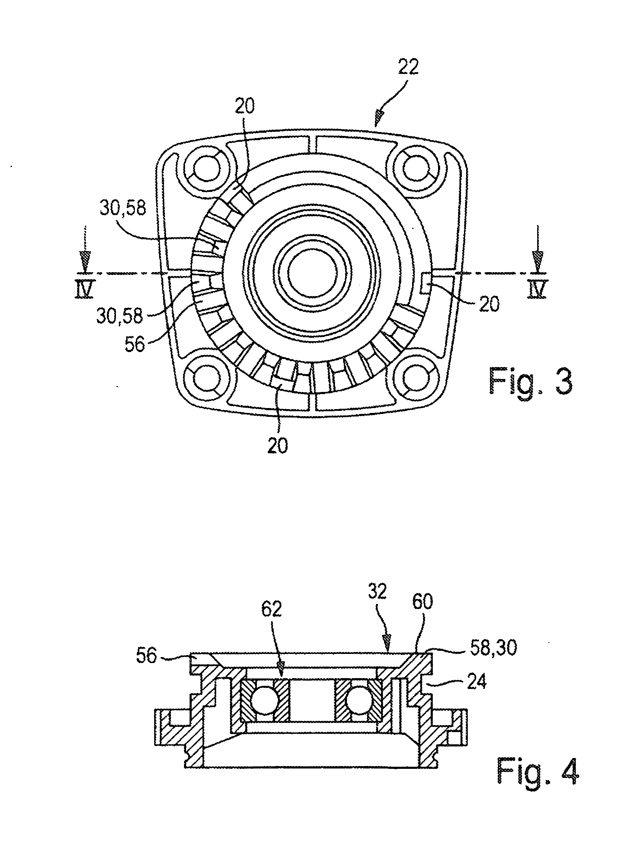

Die nachfolgenden Figuren zeigen nun Gestaltungen der Erfindung, wobei die Schutzhaube bis auf die nachfolgend beschriebenen Anschlagmittel identisch zu der Schutzhaube gemäß den Figuren 1 und 2 ausgebildet ist und insoweit auf die vorstehende Beschreibung verwiesen wird. Der Spindelhals, wie er in den Figuren 3 und 4 gezeigt ist, hat keine Veränderung erfahren, so dass auch insoweit auf die vorstehende Beschreibung Bezug genommen wird. Es werden darüber hinaus gleiche Bezugszeichen für gleiche Bauteile verwendet.

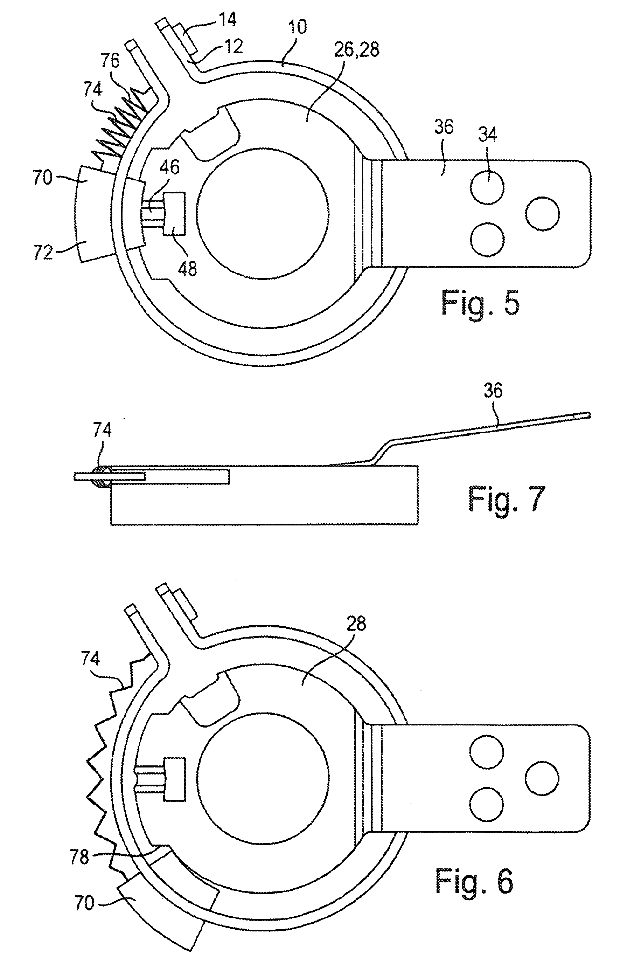

Der halbkreisscheibenförmige Abdeckabschnitt 4 mit dem radial äußeren eine Schleif- oder Trennscheibe überfangenden Randabschnitt 6 ist in den nachfolgenden Figuren 5 bis 13 nicht dargestellt, ebensowenig wie der kragenförmige flanschartige Abschnitt 8. Gezeigt ist lediglich der hiermit verbundene ebenfalls kragenförmige flanschartige aus einem streifenförmigen Bandmaterial auf Kreisform gebogene Halteabschnitt 10, der auch als Spannband bezeichnet wird. Der Halteabschnitt 10 ist ebenso wie in den Figuren 1 und 2 aufweitbar und weist zwei nach radial außen gebogene Befestigungsabschnitte 12 auf, die durch eine lediglich angedeutete Schraube 14 miteinander verbindbar und aufeinander zu bzw. voneinander weg bewegbar sind. Ebenfalls nicht dargestellt sind hier die beschriebenen Kulissenzapfen zum Aufschieben der Schutzhaube in einer bestimmten vorgegebenen Position, die dann mit einer in Umfangsrichtung verlaufenden nutförmigen Führungsausnehmung zusammenwirken und in eine Hintergriffstellung verdrehbar sind. Diesbezüglich sind die nachfolgenden Ausgestaltungen jedoch analog zu den Figuren 1 und 2 ausgebildet.

Ebenfalls identisch ausgebildet ist das Rastmittel 26, das als Federblech in einer flächenhaft erstreckten Form als Federblech 28 ausgebildet ist, welches mit Gegenrastmitteln 30 an der axialen Stirnseite 32 des Getriebeflanschteils 22 in einer jeweiligen Rast- oder Drehstellung drehhemmend zusammenwirkt. Figur 5 zeigt nun darüber hinaus ein Anschlagmittel 70, das dem Abschnitt 36 des Federblechs 28, mit dem das Federblech 28 gegen die Innenseite der Schutzhaube anliegt und mit dieser über Nieten 34 verbunden ist, gegenüberliegt. Bei dem Anschlagmittel kann es sich im vorliegenden Fall um einen ringsegmentförmigen Abschnitt 72 handeln, der mittels einer Feder 74 (hier eine Zugfeder) in einer ersten Position, in der das Anschlagmittel 70 mit dem Federblech 28 zusammenwirkt, gehalten ist, wobei die Feder 74 mit der Schutzhaube 2 verbunden ist. Gegen die Kraft der Feder 74, die als Rückstellmittel 76 dient, kann durch Auslenkung des Anschlagmittels 70 von einer ersten in eine zweite Position, die in Figur 6 gezeigt ist, das Anschlagmittel 70 außer Eingriff mit dem Federblech 28 bewegt werden, so dass eine Auslenkung des Federblechs 28 in Richtung senkrecht zur Zeichnungsebene erreicht werden kann, wodurch das Federblech 28 in axialer Richtung verschwenkt werden kann, so dass die Rastnase 46 durch axiale Auslenkung des Federblechs 28 außer Eingriff mit den zugehörigen Gegenrastelementen der Gegenrastmittel 30 gelangen kann, wobei die Rastnase 46 mit den Gegenrastmitteln 30 überrasten kann und so eine Verstellung der Schutzhaube von einer Drehstellung in eine andere durch Verdrehung der Schutzhaube erfolgen kann. Lässt man nun das Anschlagmittel 70 wieder los, so überführt die Zugfeder 74 das Anschlagmittel 70 sofort wieder in die in Figur 5 gezeigte erste Position. Die Auslenkung des Anschlagmittels 70 erfolgt dabei in Umfangsrichtung, wobei das Anschlagmittel 70 in radialer und axialer Richtung durch den kragenförmigen Abschnitt 10 geführt wird und gegen Auslenkung in diese Richtung begrenzt.

Darüber hinaus ist es durch diese Anordnung für einen Bediener auch gut zu erkennen, ob ein Einrasten der Rastnase 46 in das Gegenrastmittel 30 stattgefunden hat. In einem Zustand, in dem die Rastnase 46 nicht in das Gegenrastmittel 30 eingreift, ist eine Rückstellung des Anschlagmittels 70 in die erste Position, die in Figur 5 gezeigt ist, nicht möglich, da das Anschlagmittel 70 gegen eine Schulter 78 des Federblechs 28 zur Anlage kommt und hier blockiert ist, solange das Federblech 28 in axialer Richtung ausgelenkt ist.

Bei der Zugfeder 74 kann es sich insbesondere um eine Spiralfeder handeln, die an einem der Befestigungsabschnitte 12 mit ihrem einen Ende und mit ihrem anderen Ende am Anschlagmittel 70 angelenkt sein kann.

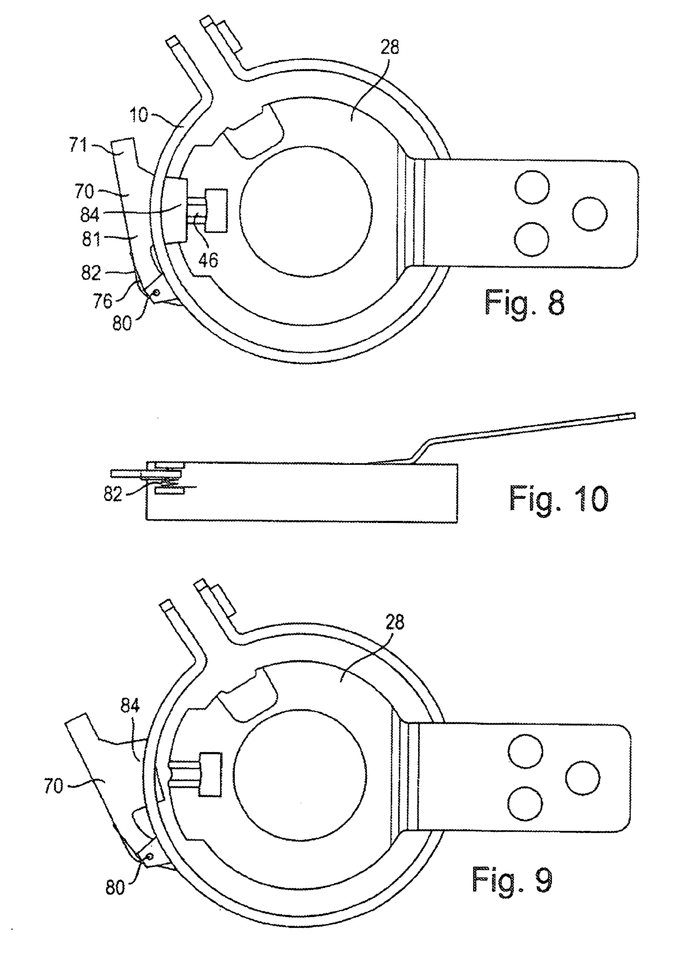

Die Figuren 8 bis 10 zeigen eine weitere Ausgestaltung der Erfindung.

Diese Figuren zeigen hinsichtlich des Anschlagmittels 70 eine alternative Ausgestaltung, wobei das Anschlagmittel 70 hier als Hebel 81 ausgebildet ist, wobei der Hebel 81 um eine parallel zur Spindelachse 54 verlaufende Schwenkachse 80 verschwenkbar ist und der Hebel 81 des Anschlagmittels 70 an der äußeren Umfangsfläche des Spannbands 10 angelenkt ist. Darüber hinaus kann mit dem Hebel 81 ein Federelement 82 zusammenwirken, das als Rückstellmittel 76 dient und den Hebel 81 des Anschlagmittels 70 in der in Figur 8 gezeigten ersten Position belastet. Der Hebel 81 weist dabei einen Abschnitt 84 auf, mit dem er in der ersten Position mit dem Federblech 28 zumindest teilweise überlappt und so eine axiale Auslenkung des Federblechs 28 in axialer Richtung in einer Weise verhindert, dass ein Außereingriffgelangen der Rastnase 46 mit den Gegenrastmitteln 30 verhindert ist. Bei einer Verschwenkung um die Schwenkachse 80 in die zweite Position, wie sie in Figur 9 dargestellt ist, gelangt der Abschnitt 84 des Schwenkhebels 81 des Anschlagmittels 70 außer Eingriff mit dem Federblech 28, d. h. es liegt keine Überlappung des Federblechs 28 mit dem Anschlagmittel 70 mehr vor, so dass das Federblech 28 in axialer Richtung frei bewegt werden kann und somit ein Außereingriffgelangen des Rastmittels 26 mit dem Gegenrastmittel 30 erfolgen kann und die Schutzhaube 2 somit um die Spindelachse 54 verdreht werden kann von einer ersten in eine zweite Drehstellung. Das Federelement 82, das als Rückstellmittel 76 dient, ist dabei insbesondere in Figur 10 dargestellt.

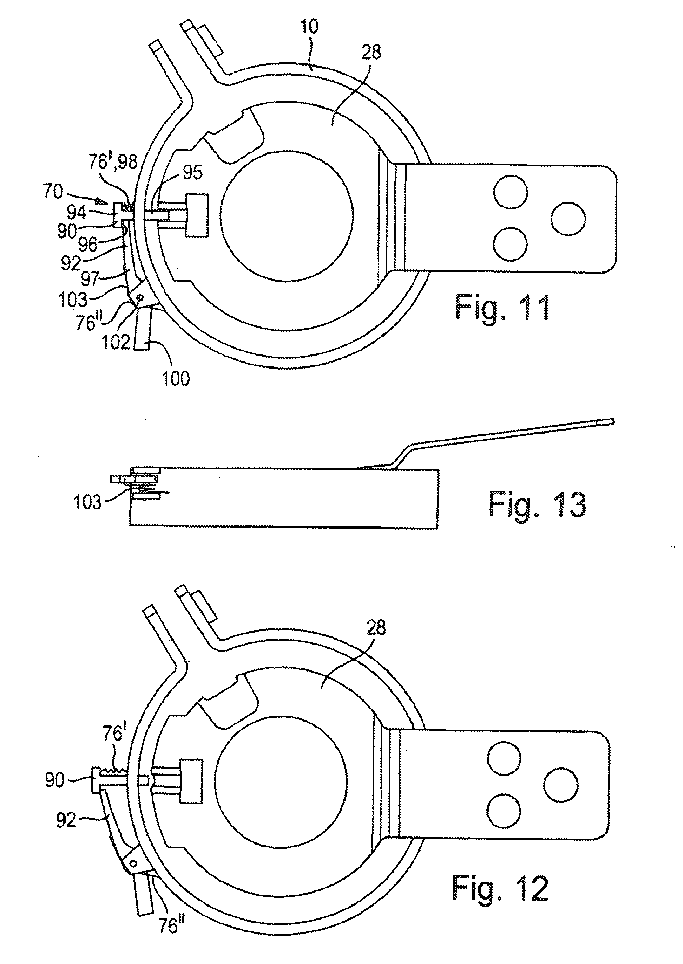

Schließlich zeigt die dritte Ausgestaltung in den Figuren 11 bis 13, wobei wiederum gleiche Teile mit gleichen Bezugszeichen versehen sind und lediglich an andere Gestaltung des Anschlagmittels 70 beschrieben werden soll, eine weitere Gestaltung eines Anschlagmittels 70, das hier aus zwei Elementen, nämlich dem eigentlichen als Anschlagmittel dienenden Stift 90 sowie einem Verschwenkhebel 92 gebildet ist. Der Stift weist hierbei einen zylindrischen Schaft 95 auf sowie einen mit dem Schaft 95 verbundenen Kopf 94, der einen größeren Durchmesser als der Schaft 95 aufweist, so dass sich im Bereich des Übergangs von Schaft 95 in Kopf 94 eine Schulter 96 ergibt. Gegen diese Schulter 96 liegt der Hebelarm 97 des Schwenkhebels 92 mit seinem freien Ende an in einer in Figur 11 unbelasteten Position. Dabei wird über eine Zugfeder 98, die ein erstes Rückstellmittel 76' bildet, der Stift 90 in radialer Richtung des Spannbandes 10 nach innen gezogen und besitzt so eine Überlappung mit dem Federblech 28 über zumindest einen Teil der Länge seines Schaftes 95.

Ebenfalls federnd gelagert mittels eines weiteren Rückstellmittels 76" , das analog dem Federelement 82 in Figuren 8 bis 10 ausgebildet ist und mit 103 bezeichnet ist, ist der Schwenkhebel 92.

Der Schwenkhebel 92 ist dabei weitgehend analog zum Schwenkhebel 81 in Figur 8 gestaltet, wobei lediglich der Anfassabschnitt 100 zur Bewegung und Verschwenkung des Schwenkhebels um die Schwenkachse 102 auf der gegenüberliegenden Seite des Hebelarms 92 ausgebildet ist und in Figur 8 beispielsweise mit 71 bezeichnet eine Verlängerung des Hebelarms darstellt.

Wird nun der Schwenkhebel durch Betätigen am Anfassabschnitt 100 um die Schwenkachse 102 ausgelenkt, so greift ein Bereich des Hebelarms 92, der gegen den Kopf 94 des Stifts 90 anliegt, an diesem an und lenkt den Stift 90 gegen die Kraft der Federn 98 und 103 aus. Die ausgelenkte Position, in der der Stift 90 nicht mehr mit dem Federblech 28 eine Überdeckung aufweist, ist in Figur 12 gezeigt. Wird der Schwenkhebel 92 nicht länger betätigt, wird aufgrund der Rückstellmittel 76' und 76" der Stift wieder in die in Figur 11 gezeigte Position überführt.

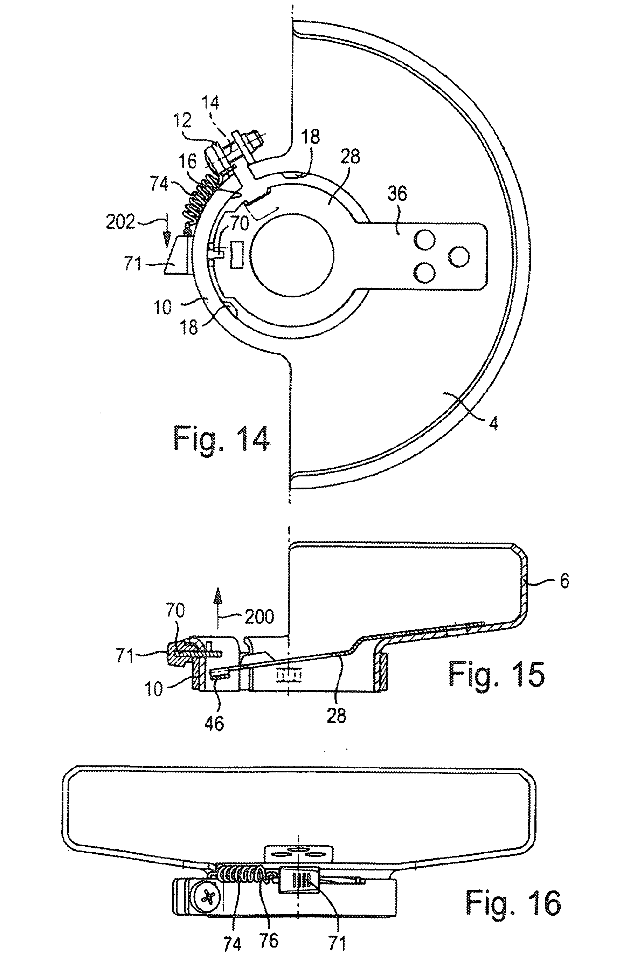

Figuren 14 bis 16 zeigen eine ähnliche Ausgestaltung zu den Figuren 5 bis 7. Im Gegensatz zu den vorstehenden Figuren ist hier auch der Abdeckabschnitt 4, der halbkreisscheibenförmig ausgebildet ist, sowie der eine Schleif- oder Trennscheibe überfangende Randabschnitt 6 dargestellt. Ebenfalls im Gegensatz zu den vorstehenden Figuren dargestellt sind die Kulissenzapfen 18, die am Innenumfang 16 des kragenförmigen Halteabschnitts vorgesehen sind. Die Fixierung der Schutzhaube gemäß den Figuren 14 bis 19 erfolgt dabei wie zu den Figuren 1 bis 4 erläutert.

Im Übrigen handelt es sich bei dem in den Figuren 14 bis 16 gezeigten Ausführungsbeispiel um eine Variation einer Schutzhaube, wie sie in den Figuren 5 bis 7 dargestellt ist. Auch in den Figuren 14 bis 16 ist ein Anschlagmittel 70 vorgesehen, das dem Abschnitt 36 des Federblechs 28 der Schutzhaube, mit dem dieses an der Schutzhaube 2 festgelegt ist, gegenüberliegt. Das Anschlagmittel 70 ist hierbei als Zapfen ausgebildet und durchragt den kragenförmigen Halteabschnitt 10, wie insbesondere in Figur 15 zu sehen ist. Auf der Außenumfangsfläche des kragenförmigen Halteabschnitts 16 ist das Anschlagmittel 70 mit einem Anfassabschnitt 71 verbunden, wobei sich der Anfassabschnitt gegen den Halteabschnitt 10 abstützt und so ein Verkippen des Anschlagmittels 70 verhindert.

In der gezeigten Darstellung ist ein Ausweichen des Federblechs 28 in Pfeilrichtung 200 durch das Anschlagmittel 70 verhindert.

Figur 16 zeigt nun eine Seitenansicht, in der die Feder 74, die zugleich als Rückstellmittel 76 dient, zu erkennen ist. Der Anfassabschnitt 71 ist dabei so ausgebildet, dass er sich gut ergreifen lässt und ein Verrutschen eines Fingers auf dem Anfassabschnitt 71 verhindert ist. Wie bei Figur 6 erfolgt ein Auslenken des Anschlagmittels durch eine Bewegung auf dem Kreisbogen des Halteabschnitts 10, wobei der Anfassabschnitt 71 hierzu eine Schräge aufweist, gegen die mit einer Kraft 202 eingewirkt werden kann, um die Feder 74 auf Zug zu belasten und das Anschlagmittel 70 auszulenken. Durch Loslassen des Anfassabschnitts 71 wird dann die Feder in ihre in Figur 14 gezeigte Position zurücküberführt.

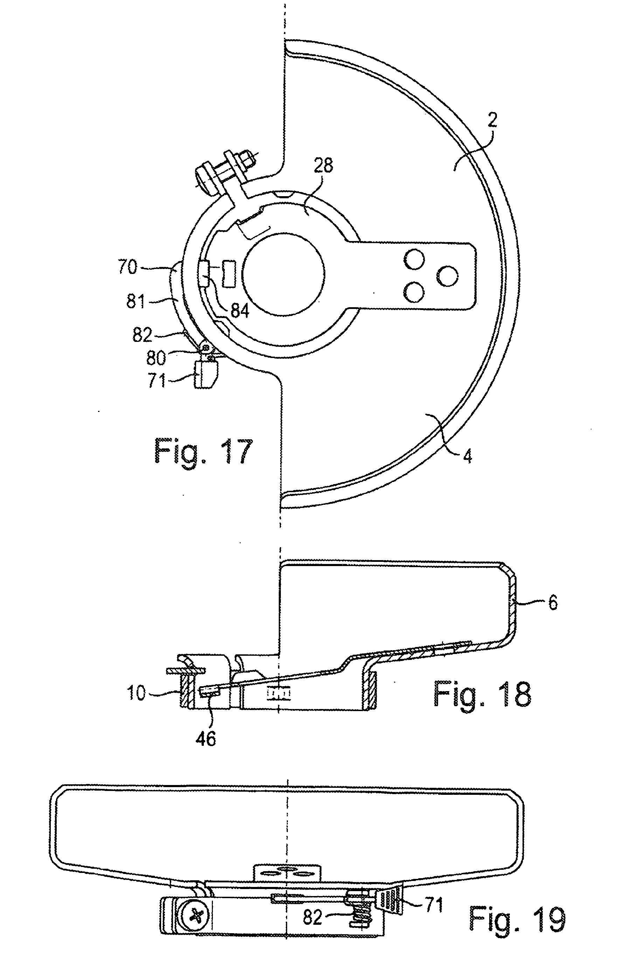

Die Figuren 17 bis 19 zeigen eine Ausgestaltung, die ähnlich zu der in den Figuren 8 bis 10 gezeigten Ausgestaltung ausgebildet ist. Auch hierbei ist wiederum die Schutzhaube 2 mit ihrem Abdeckabschnitt 4 und dem Randabschnitt 6 gezeigt. Die Schutzhaube ist ansonsten analog zu den vorstehenden Figuren 14 bis 16 aufgebaut. Ebenso wie bei der Ausgestaltung gemäß Figuren 8 bis 10 ist als Anschlagmittel 70 hier ein Hebel 81 vorgesehen, der um eine Drehachse 80 so nach radial außen verschwenkt werden kann, dass der Abschnitt 84 des Hebels sich nicht länger mit dem Federblech 28 überdeckt. Der Anfassabschnitt, der hier ebenfalls wieder mit dem Bezugszeichen 71 versehen ist, ist allerdings gegenüberliegend zum Abschnitt 84 angeordnet. Der Hebel 81 wird dabei mittels eines Federelements 82 in seiner in Figur 17 gezeigten Position gehalten.

Figur 18 zeigt nun eine entsprechende Schnittdarstellung und Figur 19 eine Seitenansicht zu Figur 17. Durch die Überlappung des Abschnitts 84 mit dem Federblech 28 wird hier wiederum eine Auslenkung des Federblechs 28 in der in Figur 17 gezeigten Position des Anschlagmittels 70 verhindert, so dass ein Ausrasten der Rastnasen 46 aus den Gegenrastmitteln 30 nicht mehr erfolgen kann. Ein Ausrasten des Rastmittels 26 aus den Gegenrastmitteln 30 ist nur möglich, sofern der Hebel 81 durch Druck auf den Anfassabschnitt 71 ausgelenkt wird und außer Eingriff mit dem Federblech 28 kommt.

Eine solche Schutzhaube lässt sich in besonders vorteilhafter Weise auf einfache und kostengünstige Weise herstellen, sie schützt die Rastmittel und Gegenrastmittel 26, 30 sowie den Spindellagerbereich 62 vor Staub und Partikel-Beaufschlagung. Sie bewirkt infolge der durch das federnd auslenkbare Rastmittel 26 ausgeübten axialen Vorspannung in Richtung der Spindelachse 54 eine spielfreie Anordnung der Schutzhaube am Spindelhals des Handwerkzeugs.

Die Schutzhaube ist des Weiteren in bedienerfreundlicher Weise verstellbar und montierbar bzw. lösbar, ohne dass hierzu ein Werkzeug, etwa ein Schraubenzieher, ein Inbus oder dergleichen verwendet werden muss.

Insbesondere kann auf die vorstehend beschriebene Weise bei einer bereits herkömmlichen Schutzhaube sichergestellt werden, dass diese die Anforderungen gemäß der neu eingeführten DIN EN 60745-2-3 erfüllt und auch bei Zerstörung einer Schleif- oder Trennscheibe verhindert wird, dass sich die Schutzhaube 2 über das zulässige Maß aus einer Drehstellung hinaus verdreht.

Die Elastizität des Federblechs 28 sowie des Anschlagmittels 70 ermöglichen einen Abbau der Energie im Belastungsfall. Zudem ist eine Steuerung der Verdrehung möglich (z. B. bewusstes Überspringen von Rasten). Auch hiermit kann Energie abgebaut werden, dies ist gegebenenfalls notwendig, um Beschädigungen am Getriebeflanschteil zu verhindern.

## Patentansprüche

1. Elektrohandwerkzeug mit einer am Spindelhals lösbar befestigbaren Schutzhaube (2), die um eine zur Spindelachse (54) parallele oder mit dieser fluchtenden Achse zumindest beschränkt verdrehbar ist und über ein federnd vorgespanntes Rastmittel (26) an der Schutzhaube (2) in verschiedenen Drehstellungen mit einem Gegenrastmittel (30) am Spindelhals drehhemmend zusammenwirkt, wobei das Rastmittel (26) mit dem Gegenrastmittel (30) in jeder der verschiedenen Drehstellungen in Eingriff befindlich ist, wobei die Schutzhaube (2) auf den Spindelhals aufschiebbar und dann in eine Hintergriffsstellung bringbar ist, und wobei das Rastmittel (26) an der Schutzhaube in axialer Richtung der Spindelachse (54) federnd auslenkbar ist und die Gegenrastmittel (30) an der axialen Stirnseite (32) des Spindelhalses vorgesehen sind,
**dadurch gekennzeichnet, dass**
ein Anschlagmittel (70) vorgesehen ist, das in einer ersten Position mit dem Rastmittel (26) zusammenwirkt und die federnde Auslenkung des Rastmittels (26) in axialer Richtung der Spindelachse (54) derart begrenzt, dass Rastmittel (26) und Gegenrastmittel (30) in Eingriff gehalten werden und in einer zweiten Position die federnde Auslenkung des Rastmittels (26) in axialer Richtung der Spindelachse (54) soweit freigibt, dass Rastmittel (26) und Gegenrastmittel (30) außer Eingriff und zueinander verdrehbar sind.

2. Elektrohandwerkzeug nach Anspruch 1,
**dadurch gekennzeichnet, dass**
das federnd auslenkbare Rastmittel (26) im wesentlichen senkrecht zur Spindelachse (54) erstreckt ist, und/oder als flächenhaftes Federblech (28) ausgebildet ist.

3. Elektrohandwerkzeug nach Anspruch 1 oder 2,
**dadurch gekennzeichnet, dass**
das federnd auslenkbare Rastmittel (26) eine Öffnung (40) aufweist, durch welche sich die Antriebsspindel oder Werkzeugachse hindurcherstreckt.

4. Elektrohandwerkzeug nach einem der vorstehenden Ansprüche,
**dadurch gekennzeichnet, dass**
die Schutzhaube (2) einen kragenförmigen Abschnitt (8, 10) aufweist, mit dem sie auf den Spindelhals aufschiebbar ist, und dass das federnd auslenkbare Rastmittel (26) mit einem die Antriebsspindel oder Werkzeugachse umgebenden Abschnitt (38) innerhalb des kragenförmigen Abschnitts (8, 10) angeordnet ist.

5. Elektrohandwerkzeug nach einem der vorstehenden Ansprüche,
**dadurch gekennzeichnet, dass**
das federnd auslenkbare Rastmittel (26) an der werkzeug- oder werkstückzugewandten Innenseite der Schutzhaube (2) angeformt ist und dass das federnd auslenkbare Rastmittel (26) insbesondere einen gegen die Innenseite der Schutzhaube (2) anliegenden und mit dieser verbundenen Abschnitt (36) und zwischen diesem Abschnitt (36) und dem die Antriebsspindel oder Werkzeugachse (54) umgebenden Abschnitt (38) einen abgekanteten Verbindungsabschnitt (42) aufweist.

6. Elektrohandwerkzeug nach einem der Ansprüche 2 bis 5,
**dadurch gekennzeichnet, dass**
das als flächenhaftes Federblech (28) ausgebildete Rastmittel (26) wenigstens eine aus der Ebene des Federblechs (28) in Richtung auf die axiale Stirnseite (32) des Spindelhalses herausgedrückte Rastnase (46) aufweist, wobei die Rastnase (46) in Umfangs- und Drehrichtung der Schutzhaube (2) Auflaufschrägen bildende Flanken (50, 52) aufweist und insbesondere verrundet ausgebildet und/oder von einer gestanzten Freiformung (48) begrenzt ist.

7. Elektrohandwerkzeug nach einem der vorstehenden Ansprüche,
**dadurch gekennzeichnet, dass**
das Anschlagmittel (70) in radialer oder in Umfangsrichtung von der ersten in die zweite Position und umgekehrt bewegbar ist.

8. Elektrohandwerkzeug nach einem der vorstehenden Ansprüche,
**dadurch gekennzeichnet, dass**
das Anschlagmittel (70) in der ersten Position einen definierten Abstand zum Rastmittel (26) einhält, wobei der Abstand größer Null aber kleiner einem Abstand ist, bei dem das Rastmittel (26) und das Gegenrastmittel (30) außer Eingriff gelangen.

9. Elektrohandwerkzeug nach einem der vorstehenden Ansprüche,
**dadurch gekennzeichnet, dass**
das Anschlagmittel (70) aus der ersten Position in die zweiten Position unter Überwindung einer Rückstellkraft eines Rückstellmittels (76) bewegbar ist, wobei das Rückstellmittel (76) insbesondere eine Zug- oder Druckfeder (74, 82, 98, 103) ist.

10. Elektrohandwerkzeug nach einem der vorstehenden Ansprüche,
**dadurch gekennzeichnet, dass**
das Anschlagmittel (70) an einem um eine parallel zur Spindelachse (54) verlaufende Drehachse (80, 102) verschwenkbaren Schwenkhebel (81, 92) festgelegt ist oder durch diesen von einer ersten in eine zweite Position und umgekehrt bewegbar ist.

11. Elektrohandwerkzeuggerät nach einem der vorstehenden Ansprüche 4-10,
**dadurch gekennzeichnet, dass**
das Anschlagmittel (70) in axialer Richtung durch den kragenförmigen Abschnitt (8, 10) festgelegt ist.

12. Elektrohandwerkzeug nach einem der vorstehenden Ansprüche,
**dadurch gekennzeichnet, dass**
die Gegenrastmittel (30) an der axialen Stirnseite (32) des Spindelhalses von kronradartig angeordneten Erhebungen (58) gebildet sind, wobei vorzugsweise die Erhebungen (58) in Umfangsrichtung abgeschrägte Flanken und/oder in radialer Richtung abgeschrägte Flanken aufweisen.

13. Elektrohandwerkzeug nach Anspruch 12,
**dadurch gekennzeichnet, dass**
die Erhebungen (58) an der axialen Stirnseite (32) radial außen angeordnet sind und dass der Abschnitt zwischen ihnen und der Antriebsspindel oder Werkzeugachse von dem Federblech (28) abgedeckt ist.

14. Elektrohandwerkzeug nach einem der vorstehenden Ansprüche 12 oder 13,
**dadurch gekennzeichnet, dass**
das Federblech (28) in einer jeweiligen Raststellung gegen die axialen Erhebungen (58) des Spindelhalses anliegt.

15. Elektrohandwerkzeug nach einem der vorstehenden Ansprüche,
**dadurch gekennzeichnet, dass**
der Spindelhals Teil eines an das Werkzeuggehäuse montierbaren Getriebeflanschteils (22) ist.

## Claims

1. Electric hand tool having a protective hood (2) fastenable detachably to the spindle neck, which protective hood (2) is rotatable at least to a limited extent about an axis parallel to or aligned with the spindle axis (54) and interacts by means of a springloaded detent means (26) on the protective hood (2) in a rotation-blocking manner in various rotary positions with a counterpart detent means (30) on the spindle neck, wherein the detent means (26) is in engagement with the counterpart detent means (30) in each of the various rotary positions, wherein the protective hood (2) may be pushed onto the spindle neck and then moved into a rear engagement position, and wherein the detent means (26) on the protective hood is resiliently deflectable in axial direction of the spindle axis (54) and the counterpart detent means (30) are provided on the axial end face (32) of the spindle neck,
**characterized in that**
a stop means (70) is provided, which in a first position interacts with the detent means (26) and limits the resilient deflection of the detent means (26) in axial direction of the spindle axis (54) in such a way that detent means (26) and counterpart detent means (30) are held in engagement and in a second position enables the resilient deflection of the detent means (26) in axial direction of the spindle axis (54) to such an extent that detent means (26) and counterpart detent means (30) are disengaged and rotatable relative to one another.

2. Electric hand tool according to claim 1,
**characterized in that**
the resiliently deflectable detent means (26) extends substantially at right angles to the spindle axis (54), and/or is configured as a planar spring steel sheet (28).

3. Electric hand tool according to claim 1 or 2,
**characterized in that**
the resiliently deflectable detent means (26) has an opening (40), through which the drive spindle or tool axis extends.

4. Electric hand tool according to one of the preceding claims,
**characterized in that**
the protective hood (2) has a collar-shaped portion (8, 10), by which it may be pushed onto the spindle neck, and that the resiliently deflectable detent means (26) is arranged with a portion (38) surrounding the drive spindle or tool axis inside the collar-shaped portion (8, 10).

5. Electric hand tool according to one of the preceding claims,
**characterized in that**
the resiliently deflectable detent means (26) is moulded on the inner side of the protective hood (2) facing the tool or workpiece and that the resiliently deflectable detent means (26) has in particular a portion (36), which rests against or is connected to the inner side of the protective hood (2), and between said portion (36) and the portion (38) surrounding the drive spindle or tool axis (54) has a folded connecting portion (42).

6. Electric hand tool according to one of claims 2 to 5,
**characterized in that**
the detent means (26) configured as a planar spring steel sheet (28) has at least one detent lug (46) that is pressed out of the plane of the spring steel sheet (28) in the direction of the axial end face (32) of the spindle neck, wherein the detent lug (46) in circumferential- and rotational direction of the protective hood (2) has flanks (50, 52) forming run-up bevels and is in particular of a rounded-off configuration and/or delimited by a punched open space (48).

7. Electric hand tool according to one of the preceding claims,
**characterized in that**
the stop means (70) is movable in radial- or in circumferential direction from the first into the second position and vice versa.

8. Electric hand tool according to one of the preceding claims,
**characterized in that**
the stop means (70) in the first position maintains a defined distance from the detent means (26), wherein the distance is greater than zero but less than a distance, at which the detent means (26) and the counterpart detent means (30) move out of engagement.

9. Electric hand tool according to one of the preceding claims,
**characterized in that**
the stop means (70) is movable from the first position into the second position while simultaneously overcoming a resetting force of a resetting means (76), wherein the resetting means (76) is in particular a tension- or compression spring (74, 82, 98, 103).

10. Electric hand tool according to one of the preceding claims,
**characterized in that**
the stop means (70) is fixed on a swivel lever (81, 92), which is pivotable about an axis of rotation (80, 102) extending parallel to the spindle axis (54), or is movable from a first position into a second position by means of said swivel lever.

11. Electric hand tool device according to one of the preceding claims 4 - 10,
**characterized in that**
the stop means (70) is fixed in axial direction by means of the collar-shaped portion (8, 10).

12. Electric hand tool according to one of the preceding claims,
**characterized in that**
the counterpart detent means (30) are formed on the axial end face (32) of the spindle neck by projections (58) arranged in the manner of crown wheels, wherein preferably the projections (58) have flanks bevelled in circumferential direction and/or flanks bevelled in radial direction.

13. Electric hand tool according to claim 12,
**characterized in that**
the projections (58) are disposed radially outside on the axial end face (32) and that the portion between them and the drive spindle or tool axis is covered by the spring steel sheet (28).

14. Electric hand tool according to one of the preceding claims 12 or 13,
**characterized in that**
the spring steel sheet (28) in a respective detent position rests against the axial projections (58) of the spindle neck.

15. Electric hand tool according to one of the preceding claims,
**characterized in that**
the spindle neck is part of a gearing flange part (22) that is mountable onto the tool housing.

## Revendications

1. Appareil d'outillage électroportatif comprenant un capot de protection (2) amovible fixé sur le col de la broche, pouvant être tourné de façon limitée autour d'un axe parallèle à l'axe de broche (54) ou aligné avec cet axe et qui coopère par un élément d'encliquetage à ressort précontraint (26) solidaire du capot de protection (2) pour prendre différentes positions avec un contre-élément d'encliquetage (30) pour définir une prise dans toutes les différentes positions en rotation, dans lequel le capot de protection (2) peut être retiré du col de la broche par glissement et être mis dans une position en prise arrière, et dans lequel l'élément d'encliquetage (26) du capot de protection peut être désengagé par effet ressort de l'axe de broche (54) selon une direction axiale, et le contre-élément d'enliquetage (30) est disposée sur le coté frontal axial (32) du col de broche,
**caractérisé en ce que**
un moyen de butée (70) est prévu, qui, dans une première position coopère avec l'élément d'encliquetage (26) et de ce fait limite l'extraction par effet ressort de l'élément d'encliquetage (26) selon une direction axiale de l'axe de broche (54), **en ce que** l'élément d'encliquetage (26) et le contre-élément d'encliquetage (30) sont maintenus en prise et que, dans une deuxième position, le désengagement par effet ressort de l'élément d'encliquetage (26) selon une direction axiale de l'axe de broche (54) s'opère de sorte que l'élément d'encliquetage (26) et le contre-élément d'encliquetage (30) sont hors de prise et peuvent être tournés l'un par rapport à l'autre.

2. Appareil d'outillage électroportatif selon la revendication 1,
**caractérisé en ce que**
l'élément d'encliquetage (26) déclenchable par effet ressort est disposé sensiblement verticalement par rapport à l'axe de broche (54) et/ou est réalisé sous forme de plaque en tôle ressort (28).

3. Appareil d'outillage électroportatif selon la revendication 1 ou 2,
**caractérisé en ce que**
l'élément d'encliquetage (26) déclenchable par effet ressort comporte une ouverture (40) traversée par la broche d'entraînement ou l'arbre d'usinage.

4. Appareil d'outillage électroportatif selon l'une des revendications précédentes,
**caractérisé en ce que**
le capot de protection (2) comporte un segment en forme de col (8, 10), avec lequel elle peut coulisser le long du col de broche, et **en ce que** l'élément d'encliquetage (26) déclenchable par effet ressort est monté avec un segment (38) entourant la broche d'entraînement ou l'arbre de l'outillage, à l'intérieur du segment en forme de col (8, 10).

5. Appareil d'outillage électroportatif selon l'une des revendications précédentes,
**caractérisé en ce que**
l'élément d'encliquetage (26) déclenchable par effet ressort est solidairement fixé contre l'outillage ou sur la face intérieure du capot de protection (2) orientée vers la pièce à usiner, et **en ce que** l'élément d'encliquetage (26) déclenchable par effet ressort présente un segment de liaison (42) à bord recourbé, en particulier appuyé contre la face intérieure du capot de protection (2), lié au segment (36), et disposé entre ledit segment (36) et le segment (38) entourant la broche d'entraînement ou l'axe de l'outil (54).

6. Appareil d'outillage électroportatif selon l'une des revendications 2 à 5,
**caractérisé en ce que**
l'élément d'encliquetage (26) réalisé sous forme de plaque en tôle ressort (28) comporte au moins un nez d'encliquetage (46) qui s'étend hors du plan de la tôle ressort (28) sur le coté frontal axial (32) du col de broche, dans lequel le nez d'encliquetage (46) comporte des pans inclinées formant des flancs (50, 52) et en particulier façonnés en arrondi et /ou limités par une forme libre (48) estampée.

7. Appareil d'outillage électroportatif selon l'une des revendications précédentes,
**caractérisé en ce que**
la butée d'arrêt (70) est mobile radialement ou en périphérie entre la première et la seconde position et inversement.

8. Appareil d'outillage électroportatif selon l'une des revendications précédentes,
**caractérisé en ce que**
la butée d'arrêt (70) garde, dans sa première position, un intervalle défini par rapport à l'élément d'encliquetage (26), dans lequel l'intervalle est supérieur à zéro mais plus petit qu'un espace pour lequel l'élément d'encliquetage (26) et le contre-élément d'encliquetage (30) sont hors de prise.

9. Appareil d'outillage électroportatif selon l'une des revendications précédentes,
**caractérisé en ce que**
la butée d'arrêt (70) est mobile de la première position dans la seconde position en dépassant une force de rappel d'un organe de rappel (76), dans lequel l'organe de rappel (76) est en particulier un ressort de traction ou de poussée (74, 82, 98, 103).

10. Appareil d'outillage électroportatif selon l'une des revendications précédentes,
**caractérisé en ce que**
la butée d'arrêt (70) est fixée sur un levier pivotant (81, 92) autour d'un axe de rotation (80, 102) parallèle à l'axe de broche (54) ou est mobile au moyen de ce levier entre une première position et une seconde position et réciproquement.

11. Appareil d'outillage électroportatif selon l'une des revendications précédentes 4 -10,
**caractérisé en ce que**
la butée d'arrêt (70) est fixée dans la direction axiale par le segment (8, 10) en forme de col.

12. Appareil d'outillage électroportatif selon l'une des revendications précédentes,
**caractérisé en ce que**
le contre-élément d'encliquetage (30) est constitué de protubérances (58) en forme de couronne sur la face frontale axiale (32) du col de broche, dans lequel les protubérances (58) sont de préférence constituées de flancs arrondis dans le sens périphérique et/ou comportent des flancs arrondis en direction radiale.

13. Appareil d'outillage électroportatif selon la revendication 12,
**caractérisé en ce que**
les protubérances (58) sont disposées radialement à l'extérieur sur la face frontale axiale (32) et **en ce que** le segment localisé entre elles et la broche d'entraînement ou l'axe d'outillage est couvert par la tôle ressort (28).

14. Appareil d'outillage électroportatif selon l'une des revendications précédentes 12 ou 13,
**caractérisé en ce que**
la tôle ressort (28) est appuyée contre les protubérances axiales (58) du col de broche, dans une position d'encliquetage quelconque.

15. Appareil d'outillage électroportatif selon l'une des revendications précédentes,
**caractérisé en ce que**
le col de broche est une partie du flasque de l'entraînement (22) pouvant être montée sur le carter de la machine.
